# DEMANDE DE BREVET EUROPEEN

(11) **EP 1 710 715 A1**
(43) Date de publication de la demande: **11.10.2006**
(21) Numéro de dépôt: 05102704.3
(22) Date de dépôt: 06.04.2005
(51) Int. Cl.: G06F 17/30

(54) **Méthode dynamique de rendu visuel de fenetres d'affichage et de saisie de données sur un écran d'ordinateur**

(71) Demandeur: Amadeus s.a.s, 06410 Biot (FR)
(72) Inventeur: Molenaar, Richard, 06000 Nice (FR)
(74) Mandataire: Decobert, Jean-Pascal

(57) **Abrégé**

Une méthode de rendu visuel de fenêtres d'affichage et de saisie de données sur un écran d'ordinateur est décrite. Les fenêtres sont ouvertes à l'aide d'un navigateur par l'utilisateur d'un site Web distant. En réponse à une requête émise par le navigateur de l'utilisateur le site renvoie à celui-ci, à travers le réseau sur lequel ils sont connectés, une forme générique de la page demandée. Le navigateur, au cours d'un bref affichage de la forme générique de la page, capture les tailles des éléments affichés, calcule de nouvelles largeurs d'affichage et re-dimensionne les éléments. Après quoi le navigateur affiche d'une façon permanente la page dont les éléments ont été ajustés pour obtenir un bon rendu visuel.

La forme générique de la page n'inclut pas d'information de pré positionnement des éléments à afficher et est donc indépendante des moyens d'affichage de l'utilisateur.

## Description

### DOMAINE TECHNIQUE DE L'INVENTION

La présente invention concerne les interfaces graphiques utilisées pour l'affichage et la collecte d'informations à partir d'un écran relié à un ordinateur ou à tout dispositif similaire. Elle décrit plus particulièrement une méthode pour adapter dynamiquement l'affichage et les champs de collecte des données aux caractéristiques particulières d'environnement propre à un utilisateur, et aux choix et modifications effectués par ce dernier, comme la largeur de la fenêtre d'affichage ou la langue choisie pour dialoguer avec l'application logicielle sélectionnée.

### ÉTAT DE LA TECHNIQUE

Avec le formidable développement de l'Internet, et de son application principal le Web ou « world wide web » qui mettent à disposition des utilisateurs des quantités toujours croissantes d'informations sous forme de pages accessibles à partir d'un navigateur le problème s'est très tôt posé de la visualisation de ces pages sur tout type d'écran d'ordinateur et de dispositifs similaires dont la variété n'a cessé de croître. Variété de types d'écran d'autant plus grande que le Web est maintenant non seulement accessible à partir de postes fixes tels que les ordinateurs de bureau ou les stations de travail qui disposent de grands, voire de très grands écrans, mais aussi depuis des ordinateurs et dispositifs portables incluant des assistants personnels ou même des téléphones sans-fil dits multimédia dont les capacités d'affichage sont alors beaucoup plus réduites.

Dans une première phase de développement du Web et de l'Internet, les pages accessibles aux utilisateurs à partir de sites toujours plus nombreux et mis en oeuvre par des organisations commerciales, des administrations et toutes sortes d'organismes voire des particuliers, contenaient essentiellement des informations statiques avec un formatage fixe généralement adapté à un standard particulier d'écran ou de fenêtres d'affichage telles que celles qui sont générées par l'un ou l'autre des navigateurs disponibles pour consulter et afficher ces pages sur un écran d'ordinateur. Le plus répandu actuellement de ces navigateurs est connu sous le nom « Internet Explorer » et, de fait, inclus dans le système d'exploitation « Windows » distribué par la société américaine « Microsoft Corporation ». Système d'exploitation qui équipe une majorité d'ordinateurs à travers le monde. D'autres navigateurs sont cependant utilisés, en particulier « Netscape », le navigateur de la société américaine « Netscape Communications Corporation » qui a eu beaucoup de succès mais a perdu sa prééminence à la fin des années 90. La société Netscape a été aussi à l'origine de la création d'une fondation connue sous le nom de « Mozilla » dont le but est de promouvoir le développement de navigateurs dont le code source est disponible gratuitement pour qu'il puisse être modifié et redistribué, dans un contexte de développement communautaire. Un nouveau navigateur connu sous le nom de « Firefox » en est directement dérivé. Il connaît un succès croissant.

Dans le cas d'affichage de pages statiques, la seule mesure prise parfois en direction de l'utilisateur par le concepteur du site, consiste en un simple avertissement indiquant que la page consultée serait d'autant mieux visible que l'on utiliserait tel ou tel navigateur et un écran autorisant une fenêtre d'affichage d'au moins, par exemple, 1024x768 pixels ou points d'affichage élémentaires. Au-delà de ce simple avertissement de nombreuses améliorations ont été apportées au fil des années pour délivrer effectivement à chaque utilisateur de sites Internet le format de page le mieux adapté à l'écran dont il dispose ou à la taille de la fenêtre utilisée. C'est en particulier le cas des sites commerciaux qui doivent faire des efforts particuliers pour retenir leurs clients quels que soient le matériel et les logiciels utilisés par ceux-ci. D'autres paramètres doivent aussi être considérés avec soin. La langue d'affichage des informations est particulièrement importante pour les sites vendant des services ou des marchandises. L'affichage d'informations, dans une langue qui ne serait pas maîtrisée par le client, rend de fait toute transaction impossible. La disponibilité d'un site en plusieurs langues pose alors le problème, pour ce qui est de l'affichage, que la traduction d'un texte est très variable d'une langue à une autre en termes de nombres de mots à utiliser, et du nombre de lettres de ces mots, quand il ne faut pas recourir à des idéogrammes.

Par ailleurs tous les sites commerciaux d'importance, et beaucoup d'autres, ne se contentent plus d'afficher des informations mais demandent que l'utilisateur interroge le site qui lui-même a accès à une base de données. C'est par exemple le cas des agences de voyages qui doivent accéder aux horaires des compagnies aériennes opérant au niveau mondial ou à aux réservations des chaînes hôtelières internationales. L'agence de voyage, ou le particulier qui interroge un tel site, devra pouvoir le faire de n'importe où dans le monde dans une langue qu'il maîtrise. Le client, dans cet exemple, voudra bien sûr connaître d'abord les horaires et tarifs de tel ou tel vol avant, éventuellement, de conclure une transaction « en ligne » qui demandera que l'on puisse communiquer au site, d'une façon sécurisée, un numéro de carte de crédit pour débiter la transaction. L'entrée d'informations par l'utilisateur, à destination du site, se fait sous de nombreuses formes et entre autres : en cliquant sur des boutons, par l'entrée de texte dans une fenêtre ou en opérant un choix dans une liste déroulante. Moyens de communiquer avec le site qui font partie des éléments à afficher sur l'écran de l'utilisateur.

Egalement, en fonction de l'utilisation particulière qu'un client voudra faire d'un site, il devra avoir la possibilité de ne pas afficher certains éléments qui lui seraient inutiles. Ceci entraîne le besoin d'une personnalisation supplémentaire des fenêtres d'affichage et de collecte des données.

Pour obtenir ces résultats de nombreuses solutions ont été proposées qui, souvent, font porter au site lui-même toute la difficulté et la complexité de la mise en oeuvre. Par exemple, il est possible de prévoir de délivrer à partir du site, pour une page donnée, autant de variantes qu'il y a de cas différents d'affichage à prévoir ou, à tout le moins, suffisamment de variantes pour espérer satisfaire plus ou moins bien l'ensemble des utilisateurs potentiels. Lors des transactions préliminaires qui accompagnent la connexion à un site Web par le navigateur du client le site est conçu de telle façon qu'il est capable d'acquérir suffisamment d'information quant aux capacités réelles d'affichage de son client. Le site peut alors effectuer un choix de la meilleure variante possible de la page demandée qui sera susceptible de satisfaire ce dernier.

Cette façon de faire présente de nombreux inconvénients. Le plus contraignant parmi ceux-ci est sans doute qu'il faudra que le concepteur du site prévoit de stocker autant d'options d'affichages c'est-à-dire de gabarits (ou « templates » dans la littérature technique en langue anglaise sur ce sujet) qu'il y a de combinaisons à considérer pour satisfaire l'ensemble des utilisateurs du site. Les gabarits à stocker peuvent être très nombreux ce qui multiplie d'autant l'effort de codage pour mettre en oeuvre le site et demande aussi que chaque gabarit de chacune des pages soit testé.

Un autre inconvénient est que le gabarit est choisi au moment de la connexion au site. Si l'utilisateur décide ensuite de changer la fenêtre d'affichage, par exemple sa largeur, aucune adaptation ne se fera si un mécanisme adéquat n'a pas été prévu.

Plus récemment des méthodes d'affichage plus sophistiquées ont été proposées comme celle décrite dans la demande de brevet auprès de l'office américain des brevets (USPTO) portant le numéro 2003/0222922, publiée le 4 décembre 2003 et intitulée « Automatic Layout Generation ». Quoique beaucoup moins rigide que la méthode des gabarits mentionnée ci-dessus la méthode de cette demande de brevet fait néanmoins appel à des feuilles de style (« layout styles ») qui décrivent une topologie préférée d'affichage spécifiant, par exemple, un affichage sur 3 colonnes. Cependant les éléments à afficher doivent être un multiple d'une largeur standard et sont placés dans une même rangée pour autant que leur largeur le permet. La feuille de style est choisie en fonction de la taille de la fenêtre d'affichage et de la largeur standard. Là aussi de nombreuses feuilles de style sont à prévoir et devront être testées dans l'environnement utilisateur.

Dans le même ordre d'idée une autre technique d'affichage souvent utilisée pour des raisons esthétiques (les éléments à afficher sont bien répartis et alignés) consiste à définir une structure de table en utilisant les balises correspondantes du langage HTML « Hyper-Text Markup Language », le langage standard utilisé pour coder les pages des sites Web. Les éléments devant figurer dans la page (texte, graphiques, fenêtres de saisie des données etc.) sont alors affichés d'une façon prédéterminée dans les cellules de la table et ne peuvent être adaptée à la fenêtre d'affichage.

### OBJET DE L'INVENTION

L'objet général de l'invention est de proposer une méthode d'affichage dynamique qui s'affranchit des moyens dont un utilisateur dispose pour consulter les pages d'un site Web.

Un autre objet de l'invention est d'obtenir ce résultat à partir d'un code générique qui ne nécessite d'avoir à y prédéfinir la position des éléments à afficher.

C'est en particulier un objet de l'invention de permettre que l'affichage ne nécessite pas d'avoir à recourir à des gabarits, des feuilles de style ou des tables de positionnement.

C'est aussi un objet de l'invention de permettre une personnalisation de l'affichage par l'utilisateur qui ne requiert pas une modification du code source.

C'est encore un objet de l'invention que d'utiliser la taille réelle des éléments à afficher pour les combiner au mieux lors de l'affichage.

Les autres objets, caractéristiques et avantages de la présente invention apparaîtront aux spécialistes à l'examen de la description suivante et des dessins d'accompagnement. Il est entendu que d'autres avantages peuvent être incorporés.

### RÉSUMÉ DE L'INVENTION

Une méthode de rendu visuel de fenêtres d'affichage et de saisie de données sur un écran d'ordinateur est décrite. Les fenêtres sont ouvertes par un utilisateur d'un site Web distant lequel fait appel à un navigateur pour émettre une requête vers le site à travers un réseau. Le site renvoie une forme générique de la page au navigateur. Dans une première phase le navigateur affiche brièvement la page. Au cours de cette phase, il capture les tailles des éléments affichés, effectue un calcul de nouvelles largeurs d'affichage des éléments et procède à un re-dimensionnement de ceux-ci. Ensuite, le navigateur affiche d'une façon permanente la page après que les éléments aient été ajustés. La forme générique de la page est caractérisée en ce qu'elle n'inclut pas d'information de pré positionnement des éléments à afficher. Les éléments à afficher incluent notamment des labels, des champs de contrôle et de saisie de données et des images. Certains éléments sont associés pour être affichés ensemble. Les éléments associés sont contenus dans une table.. Le calcul de nouvelles largeurs est basé sur la taille du ou des plus larges éléments à afficher ou tient compte d'une taille maximale prédéterminée. Les champs de contrôles qui excèdent la taille maximale, empêchent tout affichage supplémentaire à leur droite. L'affichage permanent est mis à jour si la fenêtre d'affichage du navigateur est modifiée par l'utilisateur. La capture des tailles, le calcul de nouvelles largeurs et le re-dimensionnement sont effectués par un code résidant dans le navigateur. Des options de personnalisation permettant à l'utilisateur de n'afficher qu'une partie des éléments renvoyés dans la forme générique de la page, la personnalisation est suivie d'une mise à jour de l'affichage permanent. Seuls les labels contenus dans le code générique doivent être modifiés pour adapter une page à une langue.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1 illustre les différentes phases d'affichage d'une fenêtre incluant des labels et des champs de saisie de données.
La FIGURE 2 décrit les étapes de l'affichage d'une page générique renvoyée par le site Web.
La FIGURE 3 décrit les étapes de capture des tailles des éléments à afficher.
La FIGURE 4 décrit les étapes de re-dimensionnement des éléments à afficher.
La FIGURE 5 illustre à travers trois exemples de fenêtre la grande souplesse d'affichage de l'invention.
Les dessins joints sont donnés à titre d'exemples et ne sont pas limitatifs de l'invention.

### DESCRIPTION DÉTAILLÉE DE L'INVENTION

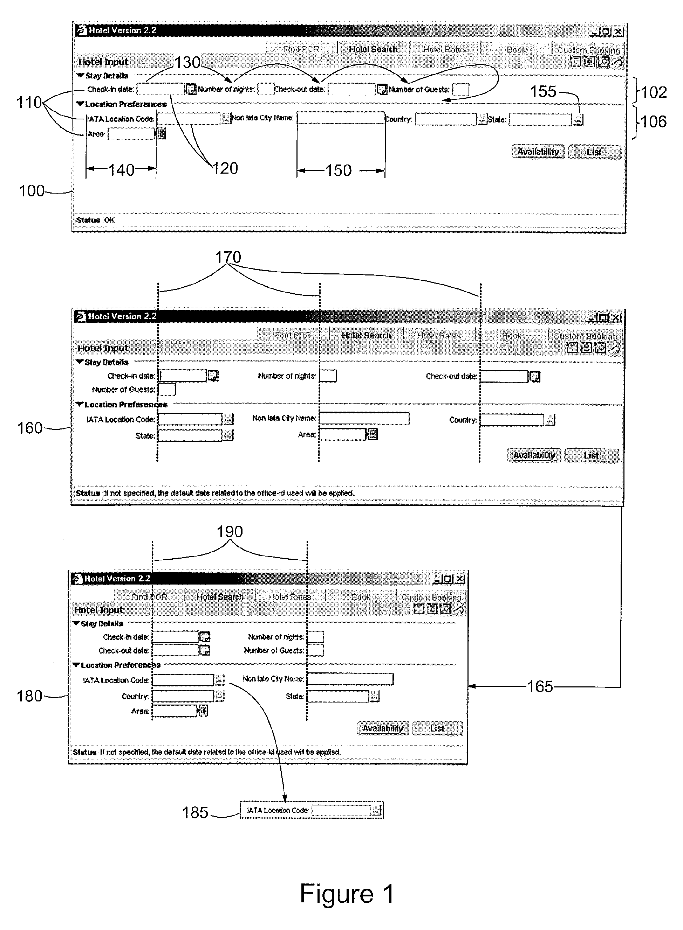

La figure 1 résume le mode de fonctionnement de l'invention. Dans une première phase, à la requête du navigateur d'un utilisateur qui désire consulter un site, la page demandée est renvoyée à ce dernier. Il s'agit ici de la forme générique de la page dans laquelle aucun positionnement des éléments à afficher n'est inclus dans le langage HTML utilisé pour la décrire. Cette page peut donc être envoyée à n'importe quel utilisateur indépendamment de ses moyens d'affichage. Dans cette première phase, le rendu visuel de la page générique est, par exemple, conforme à celui de la fenêtre supérieure (100) de la figure 1. Les labels, c'est-à-dire les courts textes décrivant les champs, par exemple (110), et les champs de saisie des données et de contrôle associés, par exemple (120), s'affichent, sans positionnement défini dans la fenêtre (100), les uns à la suite des autres (130). Ce mode d'affichage est intrinsèque au langage HTML et ne demande aucune spécification supplémentaire. Les éléments s'affichent dans l'ordre où ils sont appelés par le code source de la page HTML. Les éléments dits « en-ligne » se déploient de gauche à droite et de haut en bas en occupant tout l'espace disponible. C'est évidemment, en particulier, le cas du texte, comme dans le présent document, mais on peut aussi y inclure d'autres éléments notamment des images, dessins ou icônes (155).

Les éléments qui ne sont pas en ligne constituent des blocs indissociables qui s'empilent verticalement, de haut en bas, et s'affichent également dans l'ordre où ils sont appelés par le code source, chacun occupant potentiellement toute la largeur de la page. C'est le cas des paragraphes successifs et des titres d'un texte comme celui qui décrit la présente invention. Dans l'exemple de la figure 1 il y a deux sections qui ont été définies dans le code source (102, 106) et qui s'empilent verticalement.

On aura bien sûr compris tout l'avantage que l'on peut tirer de cette façon de coder une page qui doit être lue par le navigateur d'un client. Aucune information de positionnement n'a à être incluse dans le code source, c'est-à-dire dans le code résidant dans le site consulté par l'utilisateur, code qui est téléchargé par son navigateur. Le concepteur du site n'a pas à se préoccuper des capacités d'affichage des utilisateurs. Il n'a à développer qu'un code générique qui pourra être d'autant mieux testé, dans sa phase de développement, qu'il est intrinsèquement simple.

Les pages HTML codée selon cette approche sont dites l'être en mode flot par opposition à l'autre mode qui est dit par positionnement. Dans ce dernier mode le concepteur du site doit prédéfinir la place de chacun des éléments qu'il veut afficher sur l'écran de l'utilisateur. Parmi de nombreuses méthodes qui ont été proposées, et dont les plus pratiquées ont été discutées dans le chapitre sur l'état de l'art, une méthode qui a beaucoup de succès consiste à employer une table pour définir la topologie d'une page Web. Les éléments à afficher sont alors disposés dans les cellules de la table. Le rendu visuel est en général bon cependant au prix d'une certaine rigidité, par exemple le nombre de cellules est prédéterminé, mais surtout cela fait porter tout l'effort de codage au concepteur du site qui doit beaucoup se préoccuper des capacités d'affichage de l'utilisateur final et aussi des particularités locales notamment, la langue d'affichage du texte et des labels. Quand les capacités d'affichage de ce dernier n'entrent pas dans ce qui a été prévu, le résultat peut alors être particulièrement décevant.

Si le mode flot permet donc de simplifier considérablement le codage d'une page Web le rendu visuel de la première phase de la méthode selon l'invention est loin d'être satisfaisant. Cependant, le seul but de cette première étape est d'obtenir la taille effective d'affichage des labels et des champs de saisie des données et de contrôle dans la fenêtre ouverte par l'utilisateur avec son navigateur. L'affichage de la forme générique de la page (100) est très fugitif. En pratique cette première phase passe inaperçue de l'utilisateur. Les tailles du label (140) et celle du champ de saisie (150) les plus larges sont alors mémorisées ce qui va permettre de modifier localement le rendu visuel afin de le rendre plus attractif. C'est en effet une propriété du langage HTML et des navigateurs qui affichent les pages du Web de ne pas requérir d'avoir à fournir la largeur des éléments à afficher. C'est le navigateur avec l'interface utilisateur graphique (IUG) de l'ordinateur qui calcule la largeur effective d'affichage en fonction du contenu et de l'espace disponible. Ceci confère un avantage important à la méthode selon l'invention, en particulier quand il s'agit d'adapter l'affichage des champs à toutes les langues qui doivent être supportées pour une utilisation internationale d'un produit, puisqu'elle ne requiert pas une modification du code source autrement que par une simple traduction des labels, sans autres modifications.

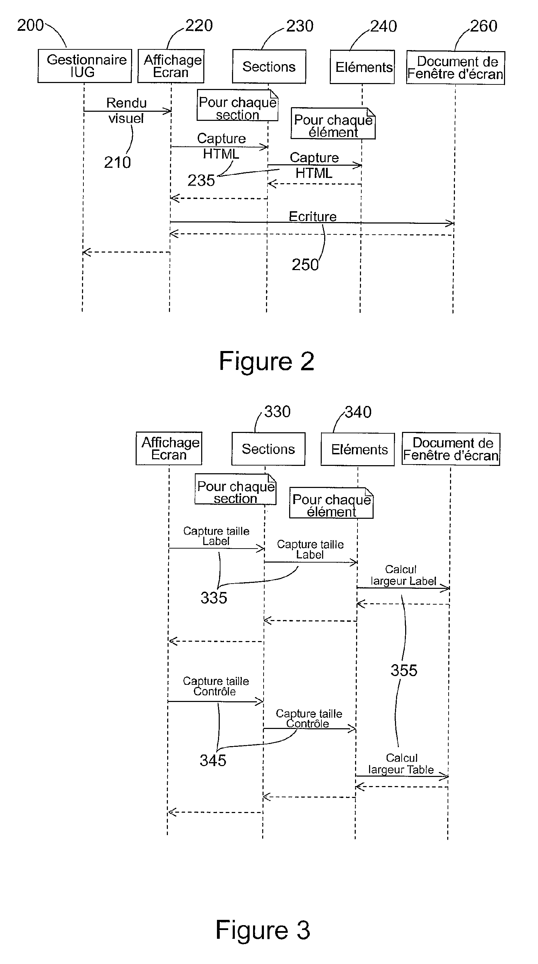

La méthode selon l'invention utilise les largeurs réelles d'affichage obtenues lors de la première phase décrite ci-dessus pour modifier le rendu visuel. L'obtention des largeurs réelles d'affichage est décrite plus précisément dans la figure 2 et les suivantes. Ainsi, dans une deuxième phase, tous les labels et champs de saisie de la page sont portés aux maximums respectifs mesurés ce qui permet d'obtenir l'affichage correspondant à la fenêtre intermédiaire de la figure 1 (160). Les labels et les champs de données sont alors bien alignés (170) dans la fenêtre ouverte par le navigateur.

Si la fenêtre d'affichage est réduite (165) les labels et les champs de saisie des données et de contrôle se réarrangent, par exemple, comme montré dans la fenêtre inférieure (180) de la figure 1. L'alignement est toujours respecté, cette fois sur deux colonnes (190), puisqu'en raison des tailles maximums mesurées il n'est plus possible de placer trois labels et leurs champs associés dans la largeur de la fenêtre modifiée.

On n'aura pas manqué de remarquer que certains des éléments de l'affichage doivent rester groupés. Par exemple, comme montré en (185), le label, son champ de saisie des données et l'icône associée doivent se déplacer ensemble. Ceci est obtenu facilement en groupant, dans le code source, les éléments correspondant dans une table qui devient un élément unique « en-ligne » qui s'insère dans le flot des éléments à afficher.

La figure 1 montre clairement qu'à partir d'un même code source on peut, avec la méthode de l'invention, obtenir un affichage dynamique ayant un rendu visuel très satisfaisant, sans avoir à recourir à des informations de positionnement ni à utiliser une table de positionnement des éléments. Comme discuté ci-dessus, l'emploi de tables par le langage HTML du code source ne sert qu'à grouper des éléments devant rester ensemble.

On remarquera notamment dans cette figure que la méthode selon l'invention permet, par exemple dans la section 2, d'obtenir automatiquement un affichage des éléments de cette section sur deux ou trois rangées et sur deux ou trois colonnes. Ce qui ne serait pas possible avec une seule table de positionnement dans le code source ou avec une feuille de style.

Un avantage supplémentaire de la méthode selon l'invention est que seules les données essentielles ont a être transmises à travers le réseau. Le rendu visuel est obtenu localement à partir du code générique de la page Web demandée et est obtenu essentiellement avec le code applicatif qui est téléchargé et installé par les utilisateurs de l'application et peut être mis à jour chaque fois qu'une modification est nécessaire ou qu'une amélioration est apportée. Les utilisateurs sont, par exemple, les agences de voyages qui doivent consulter et effectuer des réservations d'hôtels depuis une base de données centralisée en utilisant l'Internet ou un réseau privé (intranet) ou une combinaison des deux et un navigateur interprétant le langage HTML. Le code local utilise l'une ou l'autre des options compatibles avec un navigateur Web. Il s'agit de composants logiciels interagissant avec le langage HTML et bien connus des spécialistes du domaine sous des noms tels que Active-X, Javascript ou XSL.

A ce stade de la description de l'invention on aura noté que l'appellation « page Web » telle qu'on l'entend habituellement est plus restrictive que le terme de page utilisé par la description de l'invention qui suppose l'exécution d'un code local pour mettre en forme la page générique au moment ou elle est reçue du serveur alors qu'une page Web est normalement stockée sur le serveur et transmise telle quelle pour être affichée. Le terme de page continue cependant à être employé ci-après dans le sens qu'implique le mode opératoire de l'invention.

La figure 2 et les suivantes décrivent plus précisément les étapes de la méthode de rendu visuel de l'invention. La figure 2 correspond à la première phase discutée dans la figure 1 où il s'agit d'afficher d'une façon très fugitive la forme générique de la page Web recherchée.

Dans cette première phase le code HTML doit être capturé pour que l'interface utilisateur graphique (IUG) qui équipe tout ordinateur puisse afficher la page sur l'écran de l'utilisateur. En pratique l'IUG (200) appelle l'opération de rendu visuel (210) pour l'écran (220). Ce qui est à afficher, comprenant en général plusieurs sections (230), chacune doit retrouver le code HTML (235) correspondant à tous les éléments de la page (240). Quand tout le code a été retrouvé il est utilisé pour générer, sous la forme d'une opération d'écriture (250), un document objet à afficher dans la fenêtre ouverte par le navigateur (260).

Comme on l'a déjà vu dans la figure 1 tous les éléments du code HTML entrés par le concepteur de la page sont, dans cet exemple, composés d'un label et d'un champ associé de saisie des données et de contrôle. Pour qu'ils restent groupés lors de l'affichage, et forment un élément indissociable, ils sont placés dans un conteneur, c'est-à-dire une table telle que définie par le langage HTML. L'invention demande explicitement que chacune de ces tables doit pouvoir être considérée comme un élément « en ligne » dans le flot des éléments à afficher.

Ici il est utile de remarquer que le code HTML et les navigateurs ont, au cours des années, reçus de nombreuses améliorations. En particulier l'adoption d'une version dite dynamique du langage HTML, ou encore DHTML de l'anglais « Dynamic HTML », a permis de mieux contrôler la mise en page des éléments à afficher. Elle autorise notamment qu'une page puisse changer et interagisse avec l'utilisateur sans avoir à communiquer avec le serveur. En ce qui concerne l'invention, DHTML permet d'accéder aux éléments affichés et de déterminer leurs tailles en utilisant « JavaScript », déjà mentionné précédemment, qui est un langage de script intimement incorporé aux navigateurs. DHTML est présent dans les navigateurs depuis les versions 4 des navigateurs « Internet Explorer » et « Netscape ». Quoiqu'il existe en pratique des différences d'implémentation du DHTML entre les différents navigateurs, une normalisation a été entreprise sous l'égide du groupe dit DOM de l'anglais « Document Object Model » qui agit dans le cadre de l'organisme principal de normalisation du Web, c'est-à-dire le W3C, de l'anglais « World-Wide Web Consortium ».

La figure 3 décrit plus particulièrement la phase de capture des tailles des éléments qui s'affichent brièvement lors de la phase 1. Opération rendue possible avec l'adoption du DHTML.. Il s'agit en particulier des paramètres permettant d'obtenir la taille des labels et des contrôles. Des propriétés numériques telles que « offsetLeft, offsetWidth » qui spécifient les coordonnées physiques et dimensions des objets, en relation avec un objet parent (conteneur), sont capturées lors d'un premier affichage. Elles permettent d'obtenir la taille effective des labels et des contrôles.

Les étapes de cette deuxième phase sont similaires à celles décrites en figure 1. Pour chaque section (330) et chaque élément (340) on capture la taille des labels (335) et des contrôles (345).

Avec les méthodes classiques du génie logiciel, une fois que toutes les largeurs des labels et des contrôles ont été capturées, on peut alors calculer la largeur maximale (355) de chacun des champs lors l'affichage préliminaire. Ce qui va permettre de redimensionner tous les éléments à afficher en tenant compte du ou des plus larges de façon a obtenir la fenêtre intermédiaire (160) de la figure 1.

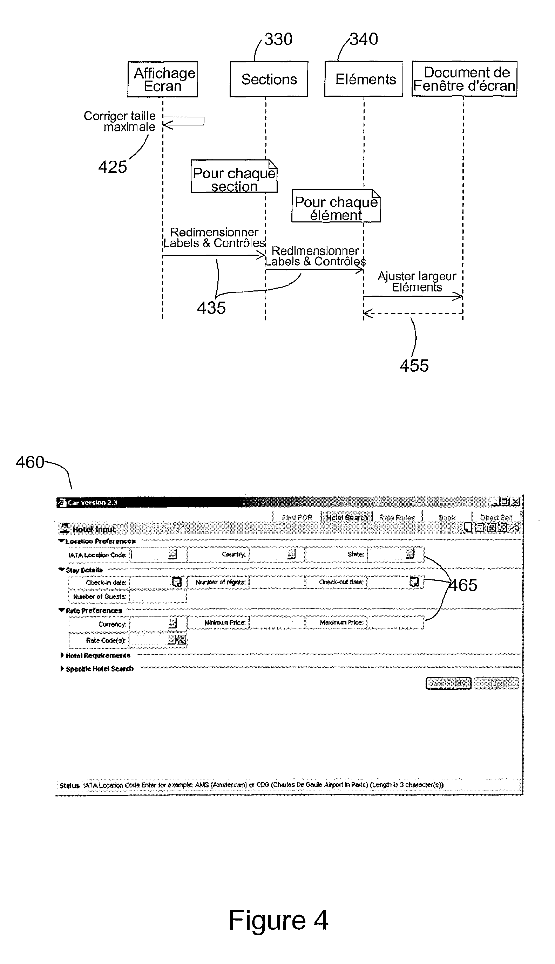

La figure 4 résume les étapes de re-dimensionnement nécessaires pour aligner les éléments à afficher dans la fenêtre ouverte par le navigateur de l'utilisateur ou pour les réaligner si celui-ci décide de modifier la fenêtre d'affichage comme dans l'exemple de la figure 1 (180).

La fonction d'affichage (400) appelle l'opération de re-dimensionnement (435), comme précédemment, pour tous les labels et contrôles de chaque section. Tous les éléments à afficher du document objet sont alors ajustés (455) notamment les conteneurs, c'est-à-dire les tables.

Le résultat des étapes de re-dimensionnement est par exemple la fenêtre (460) dans laquelle les bordures (465) des tables contenant les labels et les champs de contrôle apparaissent clairement dans le seul but de mieux faire comprendre le mode de fonctionnement de l'invention. Bien sûr, les concepteurs de pages Web utilisant la méthode de l'invention choisiront cependant de préférence, pour la clarté de l'affichage, de rendre invisible les bordures des conteneurs.

Pour éviter que les champs ne puissent prendre des dimensions trop élevées qui nuirait à l'esthétique de l'affichage l'invention prévoit qu'une largeur maximale pourra être spécifiée (425). C'est cette largeur maximale qui est alors utilisée pour l'affichage. Dans ce cas de figure, si un label est plus long que la valeur maximale il sera automatiquement replié sur au moins deux lignes. S'il s'agit d'un champ de contrôle, la largeur réelle sera utilisée, mais on empêchera que d'autres éléments puissent continuer de s'afficher horizontalement à droite de celui-ci. On forcera alors un retour à la ligne pour les éléments qui suivent.

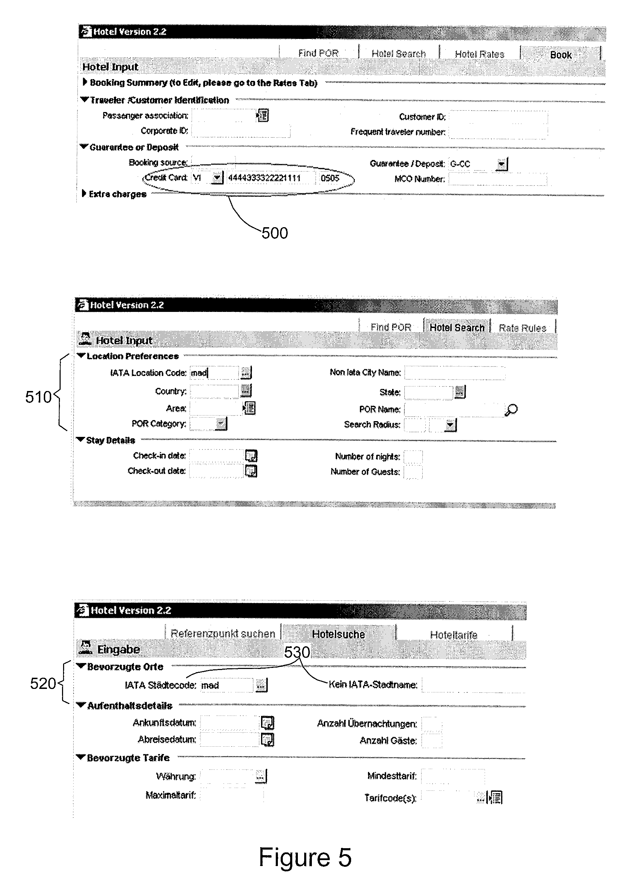

La figure 5 a pour but d'illustrer à travers trois exemples de fenêtres d'affichage la grande flexibilité de la méthode selon l'invention.

La fenêtre supérieure comprend un conteneur (500) qui contient deux champs de saisie de données. Comme lorsqu'il faut entrer un type de carte de crédit et son numéro associé. Dans ce cas il s'agit d'un élément indissociable qui sera affiché comme un tout.

La fenêtre intermédiaire montre une première section (510) dans laquelle on a choisi d'afficher 8 éléments. Dans la fenêtre du bas l'utilisateur a choisi de n'afficher dans cette section que le nom de la ville (520). De plus les labels de cette page sont alors en langue allemande (530). L'utilisateur peut décider de rendre visible ou non certains éléments qui figurent dans le code source et l'affichage s'ajuste automatiquement.

La personnalisation est possible à deux niveaux. Au niveau de la section, chacune peut être rendue totalement invisible. De plus une section peut être déployée, tous les éléments sont visibles, ou refermée, seul le libellé de la section apparaît.

Au niveau d'un élément, il peut être rendu visible ou non.

Les utilisateurs ont le choix de déployer ou de refermer les sections. Ce choix est mémorisé et sera respecté lors d'un prochain affichage.

Un panneau de configuration peut être ouvert par l'utilisateur pour effectuer ses choix d'affichage.

## Revendications

1. Une méthode de rendu visuel de fenêtres d'affichage et de saisie de données sur un écran d'ordinateur, les dites fenêtres ouvertes par un utilisateur d'un site Web distant, le dit utilisateur faisant appel à un navigateur pour émettre une requête vers le dit site à travers un réseau, le dit site renvoyant une page en réponse à la dite requête, méthode dans laquelle :
le dit site Web renvoie une forme générique (100) de la dite page au dit navigateur ;
le dit navigateur affiche brièvement la dite page (250), la dite étape
d'affichage incluant :
une capture des tailles (335, 345) des éléments affichés ;
un calcul (355) de nouvelles largeurs d'affichage des dits éléments ;
un re-dimensionnement (435) des dits éléments ;
le dit navigateur affiche d'une façon permanente la dite page après que les dits éléments aient été ajustés (455).

2. La méthode selon la revendication 1 dans laquelle la dite forme générique (100) de la dite page est **caractérisée en ce qu'**elle n'inclut pas d'information de pré positionnement des éléments à afficher.

3. La méthode selon l'une quelconque des revendications précédentes **caractérisée en ce que** les dits éléments à afficher incluent notamment des labels (110), des champs de contrôle et de saisie de données (120) et des images (155).

4. La méthode selon la revendication 3 dans laquelle des éléments sont associés pour être affichés ensemble (185).

5. La méthode selon la revendication 4 dans laquelle les dits éléments associés sont contenus dans une table (465).

6. La méthode selon la revendication 1 dans laquelle l'étape de calcul de nouvelles largeurs est basée sur la taille du ou des plus larges éléments à afficher (140, 150).

7. La méthode selon la revendication 1 dans laquelle l'étape de calcul de nouvelles largeurs est basée sur une taille maximale prédéterminée (425).

8. La méthode selon la revendication 7 dans laquelle les dits champs de contrôles, qui excèdent la dite taille maximale, empêchent tout affichage supplémentaire à leur droite.

9. La méthode selon la revendication 1 dans laquelle l'étape d'affichage permanent inclut une étape de mise à jour (180) si la fenêtre d'affichage du dit navigateur est modifiée (165) par le dit utilisateur.

10. La méthode selon la revendication 1 dans laquelle les étapes de capture des tailles, calcul de nouvelles largeurs et re-dimensionnement sont effectuées par un code résidant dans le dit navigateur.

11. La méthode selon la revendication 10 dans laquelle le dit code résidant inclut des options de personnalisation permettant au dit utilisateur de n'afficher qu'une partie (520) des éléments renvoyés dans la dite forme générique de la page, la dite étape de personnalisation étant suivie d'une mise à jour de la dite étape d'affichage permanent.

12. La méthode selon la revendication 1 dans laquelle seuls les labels contenus dans le code générique doivent être modifiés pour adapter une page à une langue (530).

13. Un support lisible par ordinateur comprenant les instructions d'un programme exécutable par le dit ordinateur, le dit programme mettant en oeuvre la méthode selon l'une quelconque des revendications 1 à 12.
